# EUROPEAN PATENT APPLICATION

(11) **EP 4 362 564 A1**
(43) Date of publication of application: **01.05.2024**
(21) Application number: 21946422.9
(22) Date of filing: 24.06.2021
(51) Int. Cl.: H04W 56/00, H04W 74/08, H04W 84/06

(54) **TIMING RELATIONSHIP ADJUSTMENT METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2021/102055
(87) International publication number: WO 2022/266926

(57) **Abstract**

The present application provides a timing relationship adjustment method and apparatus. A time offset of at least one service beam is indicated to a terminal device, wherein the time offset is used for adjusting a timing relationship between a network device and the terminal device. The present application solves the problem of adjustment of timing relationships between terminal devices and network devices caused by high-speed movement of satellites, and ensures the reliability of data interaction in satellite communication scenarios.

## Description

### TECHNICAL FIELD

The present disclosure relates to a communication technical field, and more particularly to a method for adjusting a timing relationship and an apparatus for adjusting a timing relationship.

### BACKGROUND

In a related art, in a satellite communication scenario, due to a long signal transmission distance between a network device and a terminal device, data transmission may take longer. In order to ensure the reliability of data exchange in satellite communication scenarios, it is necessary to solve the problem of adjusting a timing relationship between the terminal device and the network device caused by the high-speed movement of the satellites.

### SUMMARY

Embodiments of the present disclosure provide a method for adjusting a timing relationship, and an apparatus method for adjusting a timing relationship. By indicating a time offset of at least one service beam to a terminal device, the time offset is configured to adjust the timing relationship between the network device and the terminal device, which solves the problem of adjusting the timing relationship between the terminal device and the network device caused by the high-speed movement of satellites, and ensure the reliability of data exchange in the satellite communication scenarios.

In a first aspect, embodiments of the present disclosure provide a method for adjusting a timing relationship. The method is applied by a network device and includes: indicating a time offset of at least one service beam to a terminal device. The time offset is configured to adjust the timing relationship between the network device and the terminal device.

Embodiments of the present disclosure provide a method for adjusting a timing relationship. By indicating the time offset of at least one service beam to a terminal device, the time offset is configured to adjust the timing relationship between the network device and the terminal device, which solves the problem of adjusting the timing relationship between the terminal device and the network device caused by the high-speed movement of satellites, and ensure the reliability of data exchange in the satellite communication scenarios.

In an embodiment, indicating the time offset of at least one service beam to the terminal device includes explicitly or implicitly indicating the time offset of at least one service beam to the terminal device.

In an embodiment, indicating the time offset of at least one service beam to the terminal device includes: sending a time offset set to the terminal device. The time offset set includes the time offset of at least one service beam.

In an embodiment, sending the time offset set to the terminal device includes: sending the time offset set to the terminal device via group sharing downlink control information.

In an embodiment, indicating the time offset of at least one service beam to the terminal device includes: configuring the time offset of at least one service beam at a first position of a first downlink control signaling (DCI), and sending the time offset of at least one service beam to the terminal device via the first DCI.

In an embodiment, indicating the time offset of at least one service beam to the terminal device includes: scrambling a second DCI based on a radio network temporary identifier (RNTI); configuring the time offset of at least one service beam at a second position of the second DCI scrambled, and sending the time offset of at least one service beam to the terminal device via the second DCI.

In an embodiment, indicating the time offset of at least one service beam to the terminal device includes: indicating a time offset of a target service beam to the terminal device. The target service beam is a beam currently used by the terminal device.

In an embodiment, indicating the time offset of the target service beam to the terminal device includes: indicating the time offset of the target service beam to the terminal device via a random access response.

In an embodiment, a mapping relationship is present between a frequency domain resource where the random access response is located and the time offset of the target service beam.

In an embodiment, a mapping relationship is present between an RNTI carried in the random access response and the time offset of the target beam.

In an embodiment, the time offset of the service beam includes at least one of: an offset parameter of the service beam; an offset between an offset parameter of the service beam and a reference offset parameter; a reference offset parameter, and an offset between an offset parameter of the service beam and the reference offset parameter.

In a second aspect, embodiments of the present disclosure provide a method for adjusting a timing relationship. The method is applied by a terminal device and includes: determining a time offset of at least one service beam; and adjusting the timing relationship based on the time offset.

In an embodiment, determining the time offset of at least one service beam includes: receiving a time offset set sent by a network device. The time offset set includes a time offset of at least one service beam.

In an embodiment, receiving the time offset set sent by the network device includes: receiving group sharing downlink control information sent by the network device. The group sharing downlink control information is configured to carry the time offset set.

In an embodiment, determining the time offset of at least one service beam includes: receiving a first downlink control signaling (DCI) sent by a network device, and obtaining the time offset of at least one service beam from a first position of the first DCI.

In an embodiment, determining the time offset of at least one service beam includes: receiving a second DCI sent by a network device, and obtaining the time offset of at least one service beam from scrambling information on a cyclic redundancy check (CRC) of the second DCI.

In an embodiment, determining the time offset of at least one service beam includes: receiving indication information sent by a network device, and determining a time offset of a target service beam based on the indication information. The target service beam is a beam currently used by the terminal device.

In an embodiment, receiving the indication information sent by the network device, and determining the time offset of the target service beam based on the indication information includes: receiving a random access response carrying the indication information, and obtaining the time offset of the target service beam based on the indication information.

In an embodiment, obtaining the time offset of the target service beam based on the indication information includes: obtaining a target frequency domain resource where the random access response is located, in which the target frequency domain resource is the indication information; querying a mapping relationship between frequency domain resources and time offsets of service beams according to the target frequency domain resource to obtain a target time offset that matches the target frequency domain resource.

In an embodiment, obtaining the time offset of the target service beam based on the indication information includes: obtaining a target radio network temporary identifier (RNTI) carried in the random access response, in which the target RNTI is the indication information; querying a mapping relationship between RNTIs and time offsets of service beams according to the target RNTI to obtain a target time offset that matches the target RNTI.

In a third aspect, embodiments of the present disclosure provide a communication device. The device has some or all of functions of the network device to implement the method according to the first aspect. For example, the functions of the communication device may have the functions of some or all of the embodiments in the present disclosure, or may have the functions of implementing any one embodiment of the present disclosure separately. The functions described may be implemented via hardware or by executing corresponding software through hardware. The hardware or the software includes one or more units or modules corresponding to the above-mentioned functions.

In an embodiment, the communication device includes a transceiver module. The transceiver module is configured to support the communication between the communication device and other devices. The communication device may also include a storage module configured to couple with the transceiver module and a processing module, which stores necessary computer programs and data for the communication device.

In an embodiment, the transceiver module may be a transceiver or a communication interface, and the storage module may be a memory.

In a fourth aspect, embodiments of the present disclosure provide a communication device. The device has some or all of functions of the network device to implement the method according to the second aspect. For example, the functions of the communication device may have the functions of some or all of the embodiments in the present disclosure, or may have the functions of implementing any one embodiment of the present disclosure separately. The functions described may be implemented via hardware or by executing corresponding software through hardware. The hardware or the software includes one or more units or modules corresponding to the above-mentioned functions.

In an embodiment, the communication device includes a transceiver module. The transceiver module is configured to support the communication between the communication device and other devices. The communication device may also include a storage module configured to couple with the transceiver module and a processing module, which stores necessary computer programs and data for the communication device.

In an embodiment, the transceiver module may be a transceiver or a communication interface, and the storage module may be a memory.

In a fifth aspect, embodiments of the present disclosure provide a communication device including a processor and a memory having stored therein a computer program, and the processor is configured to execute the computer program stored in the memory to cause the device to perform the method according to the first aspect.

In a sixth aspect, embodiments of the present disclosure provide a communication device including a processor and a memory having stored therein a computer program, and the processor is configured to execute the computer program stored in the memory to cause the device to perform the method according to the second aspect.

In a seventh aspect, embodiments of the present disclosure provide a communication device including a processor; and an interface circuit configured to receive code indications and transmit the code indications to the processor. The processor is configured to run the code indications to perform the method according to the first aspect.

In an eighth aspect, embodiments of the present disclosure provide a communication device including a processor; and an interface circuit configured to receive code indications and transmit the code indications to the processor. The processor is configured to run the code indications to perform the method according to the second aspect.

In a ninth aspect, embodiments of the present disclosure provide a communication system including the communication device as described in the third aspect and the communication device as described in the fourth aspect, or including the communication device as described in the fifth aspect and the communication device as described in the sixth aspect, or including the communication device as described in the seventh aspect and the communication device as described in the eighth aspect, or including the communication device as described in the ninth aspect and the communication device as described in the tenth aspect.

In a tenth aspect, embodiments of the present disclosure provide a computer-readable storage medium having stored therein indications that, when executed, cause the method according to the first aspect to be implemented.

In an eleven aspect, embodiments of the present disclosure provide a computer-readable storage medium having stored therein indications that, when executed, cause the method according to the second aspect to be implemented.

### BRIEF DESCRIPTION OF THE DRAWINGS

In order to provide a clearer explanation of the technical solution in embodiments or background technology of the present disclosure, the accompanying drawings used in embodiments or background technology of the present disclosure will be explained below.
FIG. 1 is a schematic diagram of an architecture of a communication system according to an embodiment of the present disclosure;
FIG. 2 is a flowchart of a method for adjusting a timing relationship according to an embodiment of the present disclosure;
FIG. 3 is a schematic diagram of a timing alignment data transmission of uplink and downlink of a network device side according to an embodiment of the present disclosure;
FIG. 4 is a schematic diagram of a timing misaligned data transmission of uplink and downlink of a network device side according to an embodiment of the present disclosure;
FIG. 5 is a schematic diagram of indicating a time offset of at least one service beam to a terminal device according to an embodiment of the present disclosure;
FIG. 6 is a schematic diagram of a time offset set sent to a terminal device according to an embodiment of the present disclosure;
FIG. 7 is a schematic diagram of indicating a time offset of the service beam to a terminal device according to an embodiment of the present disclosure;
FIG. 8 is a schematic diagram of a mapping relationship between a frequency domain resource and a beam time offset according to an embodiment of the present disclosure;
FIG. 9 is a flowchart of another method for adjusting a timing relationship according to an embodiment of the present disclosure;
FIG. 10 is a schematic diagram of a time offset set sent by a receiving network device according to an embodiment of the present disclosure;
FIG. 11 is a schematic diagram of a time offset of a service beam transmitted by the receiving network device in an embodiment of the present disclosure;
FIG. 12 is a schematic diagram of an apparatus for adjusting a timing relationship according to an embodiment of the present disclosure;
FIG. 13 is a schematic diagram of a communication device according to an embodiment of the present disclosure;
FIG. 14 is a schematic diagram of a chip according to an embodiment of the present disclosure.

### DETAILED DESCRIPTION

Embodiments of the present disclosure are described in detail below, examples of which are illustrated in the drawings. The same or similar elements are denoted by same reference numerals in different drawings unless indicated otherwise. The embodiments described herein with reference to drawings are explanatory, and used to generally understand the present disclosure. The embodiments shall not be construed to limit the present disclosure.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It should be understood that, although terms such as "first," "second" and "third" are used herein for describing various information, these information should not be limited by these terms. These terms are only used for distinguishing information of the same type. For example, first information may also be called second information, and similarly, the second information may also be called the first information, without departing from the scope of the present disclosure. As used herein, the term "if' may be construed to mean "when" or "upon" or "in response to determining" depending on the context.

In order to facilitate understanding, the term involved in the present disclosure is first introduced.

DCI's full name is downlink control information, which refers to downlink control information carried by a downlink physical control channel (PDCCH) and sent a network device to a user equipment (UE), including common information transmission, uplink and downlink resource allocation, and hybrid automatic retransmission request (HARQ), power control, and the like.

RNTI's full name is radio network temporary identity, which refers to a radio network temporary identity configured to distinguish/identify a user equipment (UE) connected in a cell, a specific radio channel, and a group of user equipment (UE) in case of paging, a group of user equipment (UE) sent by a network device for power control, and system information sent by a network device for all user equipment (UE).

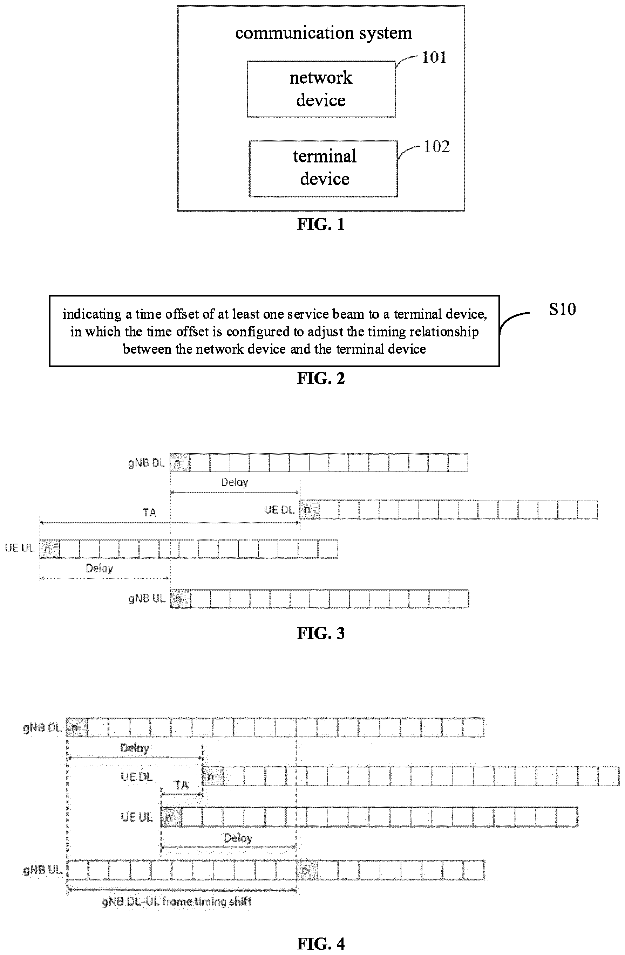

As shown in FIG. 1, FIG. 1 is a schematic architectural diagram of a communication system provided by an embodiment of the present disclosure. The communication system may include, but is not limited to one network device and one terminal device. The number and form of the devices shown in FIG. 1 are only for examples and do not constitute a limitation on embodiments of the present disclosure. In actual applications, two or more network devices may be included, and two or more terminal devices may be included. The communication system shown in FIG. 1 includes a network device 101 and a terminal device 102 as an example.

It is noted that the technical solutions of embodiments of the present disclosure may be applied to various communication systems, such as, a long term evolution (LTE) system, a fifth generation (5G) mobile communication system, a 5G new radio (NR) system, or other future new mobile communication systems.

The network device 101 in embodiments of the present disclosure is an entity for transmitting or receiving signals on a network side. For example, the network device 101 may be an evolved base station (evolved NodeB, eNB), a transmission reception point (TRP), a next generation base station (next generation NodeB, gNB) in an NR system, other base stations in future mobile communication systems, or access nodes in wireless fidelity (WiFi) systems, etc. Embodiments of the present disclosure do not limit the specific technology and the specific device form used by the network device. The network device provided by embodiments of the present disclosure may be composed of a centralized unit (CU) and a distributed unit (DU). The CU may also be called a control unit. A structure used by CU-DU may separate the protocol layers of the network device, such as base stations, and place some protocol layer functions under centralized control on the CU. The remaining part or all protocol layer functions are distributed in the DU, and the CU centrally controls the DU.

The terminal device 102 in embodiments of the present disclosure is an entity on the user side that is used to receive or transmit signals, such as a mobile phone. The terminal device may also be called a terminal, a user equipment (UE), a mobile station (MS), a mobile terminal (MT), etc. The terminal device may be a car with communication functions, a smart car, a mobile phone, a wearable device, a tablet computer (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. Embodiments of the present disclosure do not limit the specific technology and specific device form used by the terminal device.

It is understood that the communication system described in embodiments of the present disclosure is to more clearly illustrate the technical solutions of embodiments of the present disclosure, and does not constitute a limitation on the technical solutions provided by embodiments of the present disclosure. Those skilled in the art will know that, with the evolution of system architecture and the emergence of new business scenarios, the technical solutions proposed in embodiments of the present disclosure are also applicable to similar technical problems.

A method for adjusting a timing relationship and an apparatus for adjusting a timing relationship provided by the present disclosure will be introduced in detail below with reference to the accompanying drawings.

FIG. 2 is a schematic flowchart of a method for adjusting a timing relationship according to an embodiment of the present disclosure. The method is applied to a network device. As shown in FIG. 2, the method includes the following step.

In step S 10, a time offset of at least one service beam is indicated to a terminal device. The time offset is configured to adjust the timing relationship between the network device and the terminal device.

In a new radio (NR) technology of the fifth generation mobile communication technology (5G), when the high frequency is used for signal transmission, the transmission path penetration loss is large and the coverage is small. In order to improve coverage, 5G communications generally use a plurality of service beam transmission manners to increase signal strength. At present, a transmission manner based on a single beam is an omnidirectional transmission method, which may cover an entire direction at the same time, but the coverage radius in each direction is small. A transmission manner based on a plurality of beams has a larger coverage radius, but each beam needs to be polled at different times, which will bring a certain delay, that is, a certain time offset occurs. In the present disclosure, the beam transmission manner is not limited, that is, the service beam may be one or more.

Alternatively, the time offset of the service beam includes at least one of:
an offset parameter of the service beam;
an offset between an offset parameter of the service beam and a reference offset parameter; or
a reference offset parameter, and an offset between an offset parameter of the service beam and the reference offset parameter.

FIG. 3 is a schematic diagram of a timing alignment data transmission of uplink and downlink of a network device side. FIG. 4 is a schematic diagram of a timing misaligned data transmission of uplink and downlink of a network device side. As shown in FIG. 3 and FIG. 4, when uplink and downlink data are transmitted timely on the network device side, a delay in uplink and downlink data transmission will occur. For this delay, a time offset may be introduced to compensate for the transmission delay. Alternatively, the time offset may be recorded as Koffset (time offset parameter). For this, the network device needs to send the Koffset that compensates for the time offset to the terminal device, so that the terminal device may adjust the timing relationship between the network device and the terminal device based on the time offset.

Alternatively, the terminal device adjusts the timing relationship between the network device and the terminal device based on the time offset, which may be applied to a physical uplink shared channel (PUSCH) transmission scheduled by the downlink control information (DCI), the transmission of hybrid automatic repeat request (HARQ) feedback information, and the transmission of multiple access channel control element (MAC CE), etc.

Embodiments of the present disclosure provide a method for adjusting a timing relationship by indicating the time offset of at least one service beam to the terminal device, and the time offset is configured to adjust the timing relationship between the network device and the terminal device. The present disclosure solves the problem of adjusting the timing relationship between the terminal device and the network device caused by the high-speed movement of satellites, ensuring the reliability of data interaction in satellite communication scenarios.

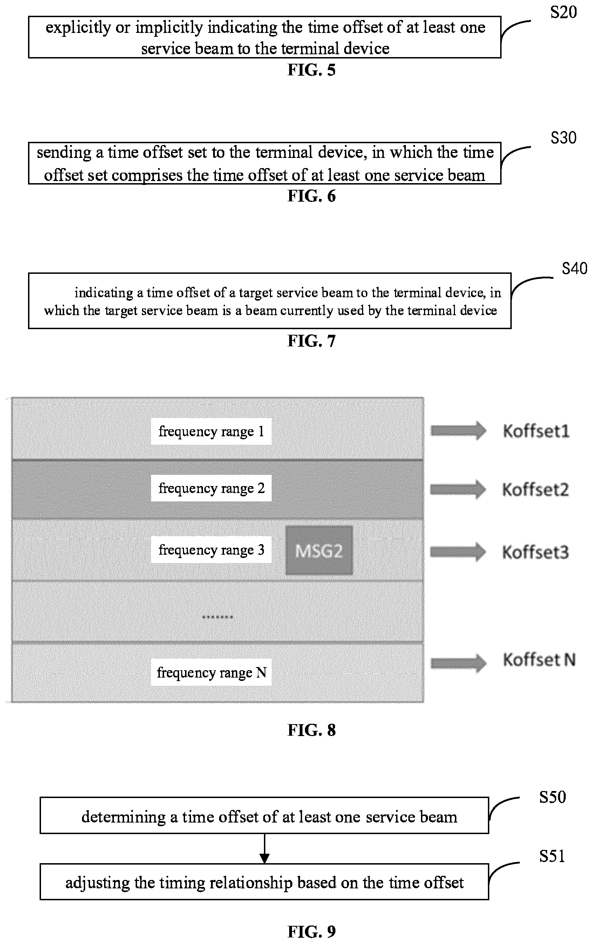

FIG. 5 is a schematic flowchart of a method for adjusting a timing relationship according to an embodiment of the present disclosure. The method is applied to a network device. As shown in FIG. 5, the method includes the following step.

In step S20, the time offset of at least one service beam is explicitly or implicitly indicated to the terminal device.

The method proposed by embodiments of the present disclosure for the network device to indicate the time offset of the service beam to the terminal device includes two forms, namely explicit indication and implicit indication. There may be one or more service beams. The time offset is configured to adjust the timing relationship between the network device and the terminal device. The explicit indication may be understood as the network device directly sending the time offset of the service beam to the terminal device via a message, that is, the network device directly carries the time offset of the service beam in the message. The implicit indication may be understood as the network device indicates the time offset of the service beam via other parameters, that is, the network device does not directly send the time offset of the service beam directly to the terminal device. Other parameters may be parameters such as frequency or RNTI. A mapping relationship is present between other parameters and the time offset. The terminal device may obtain the time offset of the service beam based on the mapping relationship.

Alternatively, when the network device explicitly indicates the time offset of the service beam to the terminal device, a time offset set may be sent to the terminal device via group sharing downlink control information.

Alternatively, when the network device implicitly indicates the time offset of the service beam to the terminal device, the time offset of the service beam may be indicated to the terminal device via a random access response.

After determining the time offset of the service beam, the terminal device may adjust the timing relationship between the network device and the terminal device based on the time offset.

Embodiments of the present disclosure provide a method for adjusting a timing relationship by indicating the time offset of at least one service beam to the terminal device, and the time offset is configured to adjust the timing relationship between the network device and the terminal device. The present disclosure solves the problem of adjusting the timing relationship between the terminal device and the network device caused by the high-speed movement of satellites, ensuring the reliability of data interaction in satellite communication scenarios.

The following introduces several implementations for network devices to explicitly indicate the time offset of service beams to terminal devices.

FIG. 6 is a schematic flowchart of a method for adjusting a timing relationship according to an embodiment of the present disclosure. The method is applied to a network device. Based on the above-mentioned embodiment, as shown in FIG. 6, the method includes the following step.

In step S30, a time offset set is sent to the terminal device. The time offset set includes the time offset of at least one service beam.

Alternatively, the network device may send the time offset set to the terminal device via group sharing downlink control information, and the time offset set includes the time offset of at least one service beam. Alternatively, the time offset of the service beam may include at least one of an offset parameter of the service beam; an offset between an offset parameter of the service beam and a reference offset parameter; or a reference offset parameter, and an offset between an offset parameter of the service beam and the reference offset parameter.

When there are a plurality of service beams, different service beams correspond to different time offsets.

Taking the time offset set of the service beam including the offset parameter of the service beam as an example, that is, the time offset set may include a specific value of the time offset parameter Koffset. For example, the time offset set may be recorded as {Koffset1, Koffset2, Koffset3...KoffsetN}. Koffset1 corresponds to a time offset parameter of service beam 1, Koffset2 corresponds to a time offset parameter of service beam 2, and KoffsetN corresponds to a time offset parameter of service beam N.

Taking the time offset set of the service beam including the offset between the offset parameter of the service beam and the reference offset parameter as an example, a reference offset parameter is set, the reference offset parameter is recorded as Koffset0, and a difference between the time offset parameter Koffset of each service beam and the reference offset parameter Koffset0 is obtained as an offset between the time offset parameter Koffset of each service beam and the reference offset parameter Koffset0. For example, the time offset set may be recorded as {offset value 1, offset value 2...offset value N}. Offset value 1 corresponds to an offset between the time offset parameter Koffset of service beam 1 and the reference offset parameter Koffset0, offset value 2 corresponds to an offset between the time offset parameter Koffset of service beam 2 and the reference offset parameter Koffset0, and offset value N corresponds to an offset between the time offset parameter Koffset of the service beam N and the reference offset parameter Koffset0.

Taking the time offset set of the service beam including the reference offset parameter, and the offset between an offset parameter of the service beam and the reference offset parameter as an example, a reference offset parameter is set, and the reference offset parameter is recorded as Koffset0. At the same time, a difference between the time offset Koffset of each service beam and the reference offset parameter Koffset0 is obtained, and the difference is used as an offset between the time offset Koffset of each service beam and the reference offset parameter Koffset0. For example, the time offset set may be recorded as f Koffset0, offset value 1, offset value 2... offset value N}. Koffset0 is a preset reference offset parameter, offset value 1 corresponds to an offset between the time offset parameter Koffset of service beam 1 and the reference offset parameter Koffset0, offset value 2 corresponds to an offset between the time offset parameter Koffset of service beam 2 and the reference offset parameter Koffset0, and offset value N corresponds to an offset between the time offset parameter Koffset of the service beam N and the reference offset parameter Koffset0.

As another implementation, when the network device sends the time offset or time offset set of the service beam to the terminal device, a downlink control signaling (DCI) may be newly defined to specifically send the time offset or the time offset set to the terminal device. The newly defined downlink control signaling (DCI) is regarded as a first downlink control signaling (DCI), which may be recorded as a first DCI. A position where the first DCI may carry a time offset or a time offset set of is determined as a first position. The time offset or the time offset set of at least one service beam is configured at the first position of the first DCI, and the time offset or time offset set of the at least one service beam is sent to the terminal device via the first DCI.

As another implementation, when the network device sends the time offset or the time offset set of the service beam to the terminal device, an existing downlink control signaling (DCI) may be reused to send the time offset or the time offset set to the terminal device. The existing downlink control signaling (DCI) is set as a second downlink control signaling (DCI), which may be recorded as a second DCI. The second DCI is scrambled based on a radio network temporary identifier (RNTI), and a position where the second DCI carries a time offset or a time offset set is determined as a second position. The time offset or the time offset set of at least one service beam is configured at the second position, and the time offset or the time offset set of at least one service beam is sent to the terminal device via the second DCI. The radio network temporary identifier (RNTI) may be fixed in the protocol or pre-notified by the terminal device. Alternatively, when scrambling the second DCI based on the radio network temporary identifier (RNTI), a cyclic redundancy check (CRC) may be scrambled to ensure the reliability of data transmission and the accuracy of data verification.

In embodiments of the present disclosure, the network device sends the time offset set to the terminal device via the explicit indication, which solves the problem of adjusting the timing relationship between the terminal device and the network device due to the high-speed movement of satellites, and ensuring the reliability of data interaction in the satellite communication scenario.

The following introduces several implementations for the network devices to implicitly indicate the time offset of service beams to the terminal devices.

FIG. 7 is a schematic flowchart of a method for adjusting a timing relationship according to an embodiment of the present disclosure. The method is applied to a network device. Based on the above-mentioned embodiment, as shown in FIG. 7, the method includes the following step.

In step S40, a time offset of a target service beam is indicated to the terminal device. The target service beam is a beam currently used by the terminal device.

The beam currently used by the terminal device is used as the target service beam. When the network device indicates the time offset of the target service beam to the terminal device, it may indicate the time offset of the target service beam to the terminal device via a random access response (MSG2).

As an implementation, the network device may pre-define that a mapping relationship is present between the frequency domain resource where the random access response is located and the time offset of the target service beam. The network device pre-defines the mapping relationship between the frequency domain resource where MSG2 is located and the time offset of the target service beam. As shown in FIG. 8, different frequency ranges correspond to different time offsets. For example, the time offset may be the time offset parameter Koffset. If MSG2 is scheduled to transmit in frequency range 3, the terminal device may determine that the notified time offset parameter Koffset is Koffset3. A range of frequency domain resources where the random access response is predefined may be a working carrier of the terminal device, a frequency range of a subset bandwidth part (BWP), or other frequency ranges.

As another implementation, the network device may pre-define a mapping relationship between the RNTI carried in MSG2 and the time offset of the target service beam. According to this mapping relationship, a RNTI value at the position of the downlink control signaling (DCI) may be detected to determine the corresponding time offset Koffset.

In embodiments of the present disclosure, the network device indicates the time offset of the target service beam to the terminal device through implicit indications, which solves the problem of adjusting the timing relationship between the terminal and the network device caused by the high-speed movement of satellites, and ensuring the reliability of data interaction in the satellite communication scenario.

FIG. 9 is a schematic flowchart of a method for adjusting a timing relationship according to an embodiment of the present disclosure. The method is applied to a terminal device. As shown in FIG. 9, the method includes the following steps.

In S50, a time offset of at least one service beam is determined.

The terminal device determines indicating the time offset of at least one service beam sent by the network device. Alternatively, when the terminal device determines the time offset of at least one service beam, it may directly receive an explicit indication of the time offset of at least one service beam sent by the network device, or may receive an implicit indication sent by the network device. Based on the implicit indication, information of the time offset of at least one service beam is determined. The time offset is configured to adjust the timing relationship between the network device and the terminal device. Regarding indicating the time offset of at least one service beam sent by the network device, the above-mentioned embodiments have already introduced in details, which will not be described again here.

In step S51, a timing relationship is adjusted based on the time offset.

A service beam that requires timing adjustment based on the time offset is used as the target service beam. The terminal device determines the target time offset of the target service beam based on the instruction message sent by the network device about the time offset representative of the service beam, determines the target time offset of the target service beam, and adjusts the timing relationship based on the target time offset.

Embodiments of the present disclosure provide a method for adjusting a timing relationship, including explicitly or implicitly determining the time offset of at least one service beam, and adjusting the timing relationship based on the time offset. The present disclosure solves the problem of adjusting the timing relationship between the terminal device and the network device caused by the high-speed movement of satellites, ensuring the reliability of data interaction in satellite communication scenarios.

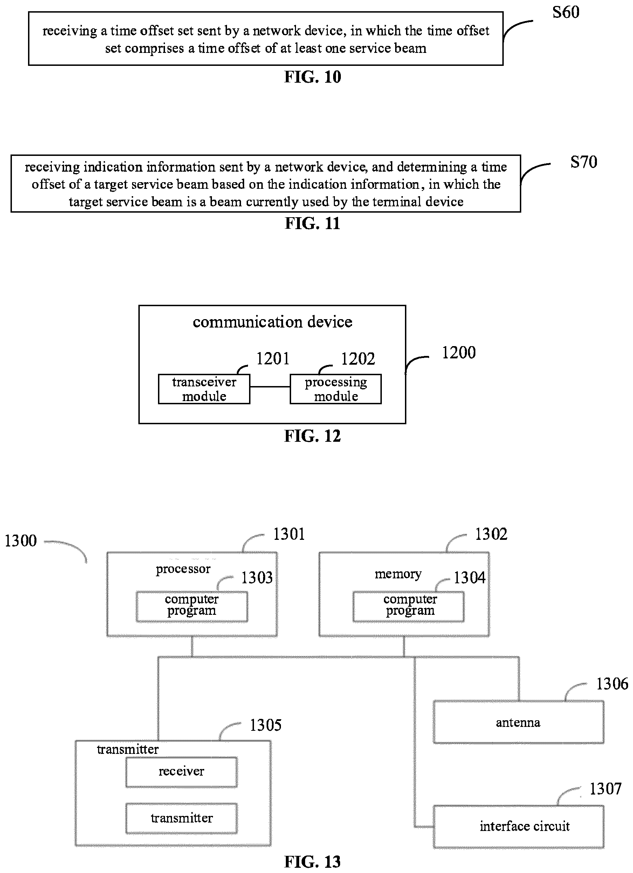

FIG. 10 is a schematic flowchart of a method for adjusting a timing relationship according to an embodiment of the present disclosure. The method is applied to a terminal device. Based on the above-mentioned embodiment, as shown in FIG. 10, the method includes the following step.

In step S60, a time offset set sent by a network device is received. The time offset set includes a time offset of at least one service beam.

There are several implementations of the terminal device receiving the explicit indication of the time offset of the service beam sent by the network device.

As an implementation, the terminal device may be configured to receive group sharing downlink control information sent by the network device, and the group sharing downlink control information is configured to carry the time offset set. The use of the group sharing downlink control information to carry the time offset set has been described in detail in the above-mentioned embodiments, which will not be described again here.

As another implementation, the terminal device may be configured to receive the first downlink control signaling (DCI) sent by the network device, and obtain the time offset of at least one service beam from the first position of the first DCI. Regarding the time offset of at least one service beam carried in the first position of the first DCI, the above-mentioned embodiment has already introduced it in detail, which will not be described again here.

As another implementation, the terminal device may be configured to receive the second DCI sent by the network device, and obtain the time offset of at least one service beam from the scrambling information on the CRC of the second DCI. Regarding the time offset of at least one service beam carried in the first position of the first DCI, the above-mentioned embodiment has already introduced it in detail, which will not be described again here.

In embodiments of the present disclosure, the time offset set sent by the network device is received, and the time offset set includes the time offset of a plurality of service beams. The present disclosure solves the problem of adjusting the timing relationship between the terminal device and the network device caused by the high-speed movement of satellites, ensuring the reliability of data interaction in satellite communication scenarios.

FIG. 11 is a schematic flowchart of a method for adjusting a timing relationship according to an embodiment of the present disclosure. The method is applied to a terminal device. Based on the above-mentioned embodiment, as shown in FIG. 11, the method includes the following step.

In step S70, indication information sent by a network device is received, and a time offset of a target service beam is determined based on the indication information. The target service beam is a beam currently used by the terminal device.

The beam currently used by the terminal device is determined as the target service beam, the terminal device may receive the implicit indication of the time offset of the target service beam sent by the network device in several possible ways.

Alternatively, the terminal device may receive a random access response carrying the indication information sent by the network device, and obtain the time offset of the target service beam based on the indication information.

As an implementation, a target frequency domain resource where the random access response is located is obtained; a mapping relationship between the frequency domain resources and the beam time offset is queried according to the target frequency domain resource, so as to obtain a target time offset that matches the target frequency domain resource. Regarding the mapping relationship between the frequency domain resources and the beam time offset, the above-mentioned embodiment has already introduced it in detail and will not be described again here.

As another implementation, a target RNTI carried in the random access response is obtained, and the target RNTI is the indication information; a mapping relationship between RNTIs and time offsets of service beams is queried according to the target RNTI, so as to obtain a target time offset that matches the target RNTI. Regarding the mapping relationship between the RNTIs and the beam time offset, the above-mentioned embodiment has already introduced it in detail and will not be described again here.

In embodiments of the present disclosure, the time offset of the target service beam sent by the network device is received. The present disclosure solves the problem of adjusting the timing relationship between the terminal device and the network device caused by the high-speed movement of satellites, ensuring the reliability of data interaction in satellite communication scenarios.

In the above-mentioned embodiments provided by the present disclosure, the methods provided by embodiments of the present disclosure are introduced from the perspectives of the network device and the terminal device. In order to implement each function in the method provided by the above-mentioned embodiments of the present disclosure, the network device and the terminal device may include hardware structures and software modules to implement the above functions in the form of hardware structures, software modules, or hardware structures plus software modules. A certain function among the above functions may be executed by a hardware structure, a software module, or a hardware structure plus a software module.

Embodiments of the present disclosure also provide a communication device. The communication device may be a terminal device (such as the terminal device in the above-mentioned method embodiments), a device in the terminal device, a device that may be used in conjunction with the terminal device. Alternatively, the communication device may be a network device, a device in a network device, or a device that may be used in conjunction with the network device.

As shown in FIG. 12, FIG. 12 is a schematic diagram of a communication device according to an embodiment of the present disclosure. The communication device 1200 may include a transceiver module 1201 and a processing module 1202.

The transceiver module 1201 may include a sending module and/or a receiving module. The sending module is configured to implement a sending function, and the receiving module is configured to implement a receiving function. The transceiver module 1201 may implement the sending function and/or the receiving function.

The communication device 1200 may be a terminal device (such as the terminal device in the above-mentioned method embodiments), a device in the terminal device, or a device that may be used in conjunction with the terminal device. Alternatively, the communication device 1200 may be a network device, a device in a network device, or a device that may be used in conjunction with the network device.

When the communication device 1200 is a network device, the communication device 1200 includes:
a transceiver module 1201 configured to indicate a time offset of at least one service beam to a terminal device, in which the time offset is configured to adjust the timing relationship between the network device and the terminal device.

Alternatively, the transceiver module 1201 is further configured to explicitly or implicitly indicate the time offset of at least one service beam to the terminal device.

Alternatively, the transceiver module 1201 is further configured to send a time offset set to the terminal device. The time offset set includes the time offset of at least one service beam.

Alternatively, the transceiver module 1201 is further configured to send the time offset set to the terminal device via the group sharing downlink control information.

Alternatively, the transceiver module 1201 is further configured to configure the time offset of at least one service beam at a first position of a first downlink control signaling (DCI), and send the time offset of at least one service beam to the terminal device via the first DCI.

Alternatively, the transceiver module 1201 is further configured to scramble a second DCI based on a radio network temporary identifier (RNTI); configure the time offset of at least one service beam at a second position of the second DCI scrambled, and send the time offset of at least one service beam to the terminal device via the second DCI.

Alternatively, the transceiver module 1201 is further configured to indicate a time offset of a target service beam to the terminal device. The target service beam is a beam currently used by the terminal device.

Alternatively, the transceiver module 1201 is further configured to indicate the time offset of the target service beam to the terminal device via a random access response.

Alternatively, the transceiver module 1201 is further configured for a mapping relationship is present between a frequency domain resource where the random access response is located and the time offset of the target service beam.

Alternatively, the transceiver module 1201 is further configured for a mapping relationship is present between an RNTI carried in the random access response and the time offset of the target beam.

Alternatively, the transceiver module 1201 is further configured for the time offset of the service beam includes at least one of: an offset parameter of the service beam; an offset between an offset parameter of the service beam and a reference offset parameter; or a reference offset parameter, and an offset between an offset parameter of the service beam and the reference offset parameter.

When the communication device 1200 is a terminal device, it includes:
a transceiver module 1201 configured to determine a time offset of at least one service beam; and
a processing module 1202 configured to adjust the timing relationship based on the time offset.

Alternatively, the transceiver module 1201 is further configured to receive a time offset set sent by the network device. The time offset set includes a time offset of at least one service beam.

Alternatively, the transceiver module 1201 is further configured to receive group sharing downlink control information sent by the network device. The group sharing downlink control information is configured to carry the time offset set.

Alternatively, the transceiver module 1201 is further configured to receive a first downlink control signaling (DCI) sent by a network device, and obtain the time offset of at least one service beam from a first position of the first DCI.

Alternatively, the transceiver module 1201 is further configured to receive a second DCI sent by a network device, and obtain the time offset of at least one service beam from the scrambling information on a CRC of the second DCI.

Alternatively, the transceiver module 1201 is further configured to receive indication information sent by the network device, and determine a time offset of a target service beam based on the indication information. The target service beam is a beam currently used by the terminal device.

Alternatively, the transceiver module 1201 is further configured to receive a random access response carrying indication information, and obtain the time offset of the target service beam based on the indication information.

Alternatively, the transceiver module 1201 is further configured to obtain a target frequency domain resource where the random access response is located, in which the target frequency domain resource is the indication information; and query a mapping relationship between frequency domain resources and time offsets of service beams according to the target frequency domain resource to obtain a target time offset that matches the target frequency domain resource.

Alternatively, the transceiver module 1201 is further configured to obtain a target RNTI carried in the random access response, in which the target RNTI is the indication information; and query a mapping relationship between RNTIs and time offsets of service beams according to the target RNTI to obtain a target time offset that matches the target RNTI.

FIG. 13 is a schematic diagram of another communication device 1300 provided by an embodiment of the present disclosure. The communication device 1300 may be a network device, or a terminal device; a chip, a chip system, or a processor that supports a network device to implement the above-mentioned method; or a chip, a chip system, or a processor that supports a terminal device to implement the above-mentioned method. The device may be used to implement the method described in the above-mentioned method embodiment. For details, reference is made to the description in the above-mentioned method embodiment.

The communication device 1300 may include one or more processors 1301. The processor 1301 may be a general-purpose processor or a special-purpose processor, or the like. For example, it may be a baseband processor or a central processing unit. The baseband processor may be used to process communication protocols and communication data. The central processor may be used to control communication devices (such as base stations, baseband chips, terminal device, terminal device chips, DU or CU, etc.), execute computer programs, and process data of the computer programs.

Alternatively, the communication device 1300 may also include one or more memories 1302, on which a computer program 1304 may be stored. The processor 1301 executes the computer program 1304, so that the communication device 1300 executes the method described in the above method embodiment. Alternatively, the memory 1302 may also store data. The communication device 1300 and the memory 1302 may be provided separately or integrated together.

Alternatively, the communication device 1300 may also include a transceiver 1305 and an antenna 1306. The transceiver 1305 may be called a transceiver unit, a transceiver, a transceiver circuit, etc., and is configured to implement transceiver functions. The transceiver 1305 may include a receiver and a transmitter. The receiver may be called as a receiver device or a receiving circuit, etc., and is configured to implement the receiving function. The transmitter may be called as a transmitter device, a transmitting circuit, etc., and configured to implement the transmitting function.

Alternatively, the communication device 1300 may also include one or more interface circuits 1307. The interface circuit 1307 is configured to receive code instructions and transmit them to the processor 1301. The processor 1301 executes the code instructions to cause the communication device 1300 to perform the method described in the above-mentioned method embodiment.

When the communication device 1300 is a network device, the transceiver 1305 is configured to perform step S10 in FIG. 2, step S30 in FIG. 6, and so on.

When the communication device 1300 is a terminal device, the transceiver 1305 is configured to perform step S50 in FIG. 9, step S60 in FIG. 10, step S70 in FIG. 11, and so on; the processor 1301 is configured to perform step S51 in FIG. 9, and so on.

In one implementation, the processor 1301 may include a transceiver for implementing receiving and transmitting functions. For example, the transceiver may be a transceiver circuit, an interface, or an interface circuit. The transceiver circuits, the interfaces or the interface circuits configured to implement the receiving and transmitting functions may be separate or integrated together. The transceiver circuit, the interface or the interface circuit may be configured to read and write codes/data, or the transceiver circuit, the interface or the interface circuit may be configured to transmit or send signals.

In one implementation, the processor 1301 may store a computer program 1303, and the computer program 1303 runs on the processor 1301, causing the communication device 1300 to perform the method described in the above-mentioned method embodiment. The computer program 1303 may be solidified in the processor 1301, in which case the processor 1301 may be implemented by a hardware.

In one implementation, the communication device 1300 may include a circuit, and the circuit may implement sending or receiving or communication functions in the above-mentioned method embodiments. The processor and the transceiver described in the present disclosure may be implemented in an integrated circuits (IC), an analog IC, a radio frequency integrated circuits (RFIC), a mixed signal (IC), an application specific integrated circuits (ASIC), a printed circuit boards (PCB), electronic equipment, etc. The processor and the transceiver may also be manufactured using various IC process technologies, such as a complementary metal oxide semiconductor (CMOS), a N-type metal-oxide-semiconductor (NMOS), a P-type metal oxide semiconductor (PMOS), a bipolar junction transistor (BJT), a bipolar CMOS (BiCMOS), a silicon germanium (SiGe), a gallium arsenide (GaAs), etc.

The communication device described in the above-mentioned embodiments may be a network device or a terminal device (such as a first terminal device in the above-mentioned method embodiment), but the scope of the time domain resource assignment device described in the present disclosure is not limited to this, and the structure of the communication device may not be as shown in FIG. 13 limits. The communication device may be a stand-alone device or may be part of a larger device. For example, the communication device may be:
(1) independent integrated circuit (IC), or chip, or chip system or subsystem;
(2) a collection of one or more ICs, or, the IC collection may also include storage components for storing data and computer programs;
(3) ASIC, such as modem;
(4) modules that may be embedded in other devices;
(5) receivers, terminal device, intelligent terminal device, cellular phones, wireless equipment, handheld devices, mobile units, vehicle-mounted equipment, network device, cloud equipment, artificial intelligence equipment, etc.;
(6) others.

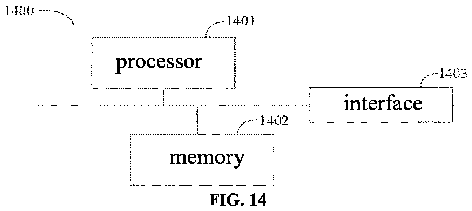

For the case where the communication device may be a chip or a chip system, refer to the schematic structural diagram of the chip shown in FIG. 14. The chip shown in FIG. 14 includes a processor 1401 and an interface 1402. The number of processors 1401 may be one or more, and the number of interfaces 1402 may be multiple.

For the case where the chip is configured to implement the functions of the terminal device in embodiments of the present disclosure:
the interface 1402 is configured to execute step S10 in FIG. 2, step S30 in FIG. 6, and so on.

For the case where the chip is configured to implement the functions of the network device in embodiments of the present disclosure:
the interface 1402 is configured to execute step S50 in FIG. 9, step S60 in FIG. 10, step S70 in FIG. 11, and so on; the processor 1301 is configured to execute step S51 in FIG. 9, and so on.

Alternatively, the chip also includes a memory 1403, which is configured to store necessary computer programs and data.

Those skilled in the art may also understand that the various illustrative logical blocks and steps listed in embodiments of the present disclosure may be implemented by electronic hardware, computer software, or a combination of both. Whether such functionality is implemented in hardware or software depends on the specific application and overall system design requirements. Those skilled in the art may use various methods to implement the functions for each specific application, but such implementation should not be understood as exceeding the scope of protection of embodiments of the present disclosure.

Embodiments of the present disclosure also provide a system for adjusting the maximum number of transmission layers. The system includes a communication device as a terminal device (such as the terminal device in the above-mentioned method embodiment) in FIG. 12 and a communication device as a network device. Alternatively, the system includes a communication device as a terminal device (such as the terminal device in the above-mentioned method embodiment) in FIG. 13 and a communication device as a network device.

The present disclosure also provides a readable storage medium on which instructions are stored. When the instructions are executed by a computer, the functions of any one of the above-mentioned method embodiments are implemented.

The present disclosure also provides a computer program product, when the computer program product is executed by a computer, the functions of any one of the above-mentioned method embodiments are implemented.

In the above-mentioned embodiments, it may be implemented in whole or in part by software, hardware, firmware, or any combination thereof. When implemented using software, it may be implemented in whole or in part in the form of a computer program product. A computer program product includes one or more computer programs. When a computer program is loaded and executed on a computer, processes or functions according to embodiments of the present disclosure are generated in whole or in part. The computer may be a general purpose computer, a special purpose computer, a computer network, or other programmable device. The computer program may be stored in or transmitted from one computer-readable storage medium to another computer-readable storage medium, for example, the computer program may be transmitted from a website, a computer, a server or a data center via a wireline (e.g. coaxial cable, optical fiber, digital subscriber line (DSL)) or wireless (such as infrared, wireless, microwave, etc.) means to transmit to another website, computer, server or data center. The computer-readable storage media may be any available media that may be accessed by a computer or a data storage device such as a server, data center, or other integrated media that contains one or more available media. The usable media may be magnetic media (e.g., floppy disks, hard disks, tapes), optical media (e.g., high-density digital video discs (DVDs)), or semiconductor media (e.g., solid state disks (SSDs)) and the like.

Those skilled in the art may understand that the first, second, and other numerical numbers involved in the present disclosure are only for convenience of description and are not used to limit the scope of embodiments of the present disclosure and also indicate the order.

At least one in the present disclosure may also be described as one or more, and the plurality may be two, three, four or more, and the present disclosure is not limited. In embodiments of the present disclosure, for a technical feature, the technical feature is distinguished by "first", "second", "third", "A", "B", "C" and "D", etc. The technical features described in "first", "second", "third", "A", "B", "C" and "D" are in no particular order or order.

The corresponding relationships shown in each table in the present disclosure may be configured or predefined. The values of the information in each table are only examples and may be configured as other values, which are not limited by the present disclosure. When configuring the correspondence between information and each parameter, it is not necessarily required to configure all the correspondences shown in each table. For example, in the table in the present disclosure, the corresponding relationships shown in some rows may not be configured. For another example, appropriate deformation adjustments may be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures may also be used, such as arrays, queues, containers, stacks, linear lists, pointers, linked lists, trees, graphs, structures, classes, heaps, hash tables or hash tables.

Predefinition in the present disclosure may be understood as definition, pre-definition, storage, pre-storage, pre-negotiation, pre-configuration, solidification, or pre-burning.

Those skilled in the art will appreciate that the units and algorithm steps of each example described in conjunction with embodiments disclosed herein may be implemented with electronic hardware, or a combination of computer software and electronic hardware. Whether these functions are performed in hardware or software depends on the specific application and design constraints of the technical solution. Those skilled in the art may implement the described functionality using different methods for each specific application, but such implementations should not be considered beyond the scope of the present disclosure.

Those skilled in the art may clearly understand that for the convenience and simplicity of description, the specific working processes of the systems, devices and units described above may be referred to the corresponding processes in the foregoing method embodiments, and will not be described again here.

The above are only specific embodiments of the present disclosure, but the protection scope of the present disclosure is not limited thereto. Those skilled in the art may easily think of changes or replacements within the technical scope disclosed in the present disclosure, and all of them is covered within the protection scope of the present disclosure. Therefore, the protection scope of the present disclosure is subject to the protection scope of the claims.

## Claims

1. A method for adjusting a timing relationship, performed by a network device and comprising:
indicating a time offset of at least one service beam to a terminal device, wherein the time offset is configured to adjust the timing relationship between the network device and the terminal device.

2. The method according to claim 1, wherein indicating the time offset of at least one service beam to the terminal device comprises:
explicitly or implicitly indicating the time offset of at least one service beam to the terminal device.

3. The method according to claim 1, wherein indicating the time offset of at least one service beam to the terminal device comprises:
sending a time offset set to the terminal device, wherein the time offset set comprises the time offset of at least one service beam.

4. The method according to claim 3, wherein sending the time offset set to the terminal device comprises:
sending the time offset set to the terminal device via group sharing downlink control information.

5. The method according to claim 1, wherein indicating the time offset of at least one service beam to the terminal device comprises:
configuring the time offset of at least one service beam at a first position of a first downlink control signaling (DCI), and sending the time offset of at least one service beam to the terminal device via the first DCI.

6. The method according to claim 1, wherein indicating the time offset of at least one service beam to the terminal device comprises:
scrambling a second DCI based on a radio network temporary identifier (RNTI); and
configuring the time offset of at least one service beam at a second position of the second DCI scrambled, and sending the time offset of at least one service beam to the terminal device via the second DCI.

7. The method according to claim 1, wherein indicating the time offset of at least one service beam to the terminal device comprises:
indicating a time offset of a target service beam to the terminal device, wherein the target service beam is a beam currently used by the terminal device.

8. The method according to claim 7, wherein indicating the time offset of the target service beam to the terminal device comprises:
indicating the time offset of the target service beam to the terminal device via a random access response.

9. The method according to claim 8, wherein a mapping relationship is present between a frequency domain resource where the random access response is located and the time offset of the target service beam.

10. The method according to claim 8, wherein a mapping relationship is present between an RNTI carried in the random access response and the time offset of the target beam.

11. The method according to any one of claims 1 to 10, wherein the time offset of the service beam comprises at least one of:
an offset parameter of the service beam;
an offset between an offset parameter of the service beam and a reference offset parameter;
a reference offset parameter, and an offset between an offset parameter of the service beam and the reference offset parameter.

12. A method for adjusting a timing relationship, performed by a terminal device and comprising:
determining a time offset of at least one service beam; and
adjusting the timing relationship based on the time offset.

13. The method according to claim 12, wherein determining the time offset of at least one service beam comprises:
receiving a time offset set sent by a network device, wherein the time offset set comprises a time offset of at least one service beam.

14. The method according to claim 13, wherein receiving the time offset set sent by the network device comprises:
receiving group sharing downlink control information sent by the network device, wherein the group sharing downlink control information is configured to carry the time offset set.

15. The method according to claim 12, wherein determining the time offset of at least one service beam comprises:
receiving a first downlink control signaling (DCI) sent by a network device, and obtaining the time offset of at least one service beam from a first position of the first DCI.

16. The method according to claim 12, wherein determining the time offset of at least one service beam comprises:
receiving a second DCI sent by a network device, and obtaining the time offset of at least one service beam from scrambling information on a cyclic redundancy check (CRC) of the second DCI.

17. The method according to claim 12, wherein determining the time offset of at least one service beam comprises:
receiving indication information sent by a network device, and determining a time offset of a target service beam based on the indication information, wherein the target service beam is a beam currently used by the terminal device.

18. The method according to claim 17, wherein receiving the indication information sent by the network device, and determining the time offset of the target service beam based on the indication information comprise:
receiving a random access response carrying the indication information, and obtaining the time offset of the target service beam based on the indication information.

19. The method according to claim 18, wherein obtaining the time offset of the target service beam based on the indication information comprises:
obtaining a target frequency domain resource where the random access response is located, wherein the target frequency domain resource is the indication information; and
querying a mapping relationship between frequency domain resources and time offsets of service beams according to the target frequency domain resource to obtain a target time offset that matches the target frequency domain resource.

20. The method according to claim 18, wherein obtaining the time offset of the target service beam based on the indication information comprises:
obtaining a target radio network temporary identifier (RNTI) carried in the random access response, wherein the target RNTI is the indication information; and
querying a mapping relationship between RNTIs and time offsets of service beams according to the target RNTI to obtain a target time offset that matches the target RNTI.

21. A communication device, comprising:
a transceiver module configured to indicate a time offset of at least one service beam to a terminal device, wherein the time offset is configured to adjust a timing relationship between a network device and the terminal device.

22. A communication device, comprising:
a transceiver module configured to determine a time offset of at least one service beam; and
a processing module configured to adjust a timing relationship based on the time offset.

23. A communication device, comprising:
a processor; and
a memory having stored therein a computer program;
wherein the processor is configured to execute the computer program stored in the memory to cause the device to perform the method according to any one of claims 1 to 11.

24. A communication device, comprising:
a processor; and
a memory having stored therein a computer program;
wherein the processor is configured to execute the computer program stored in the memory to cause the device to perform the method according to any one of claims 12 to 20.

25. A communication device, comprising:
a processor; and
an interface circuit configured to receive code indications and transmit the code indications to the processor;
wherein the processor is configured to run the code indications to perform the method according to any one of claims 1 to 11.

26. A communication device, comprising:
a processor; and
an interface circuit configured to receive code indications and transmit the code indications to the processor;
wherein the processor is configured to run the code indications to perform the method according to any one of claims 12 to 20.

27. A computer-readable storage medium having stored therein indications that, when executed, cause the method according to any one of claims 1 to 11 to be implemented.

28. A computer-readable storage medium having stored therein indications that, when executed, cause the method according to any one of claims 12 to 20 to be implemented.
